# EUROPÄISCHE PATENTANMELDUNG

(11) **EP 2 108 251 A1**
(43) Veröffentlichungstag der Anmeldung: **14.10.2009**
(21) Anmeldenummer: 09005102.0
(22) Anmeldetag: 07.04.2009
(51) Int. Cl.: A01G 9/02

(54) **Pflanzenkübel**

(30) Priorität: 11.04.2008 DE 102008018669
(71) Anmelder: Armin, Wigand, 66879 Steinwenden (DE)
(72) Erfinder: Armin, Wigand, 66879 Steinwenden (DE)
(74) Vertreter: Klein, Friedrich Jürgen

(57) **Zusammenfassung**

Die Erfindung betrifft einen aus einer Bodenplatte (1) und mehreren Seitenwänden (2) bestehenden Pflanzenkübel, dessen Seitenwände (2) an ihren Innenseiten (3) mit einer in gemeinsamer Ebene horizontal verlaufenden Nut (7) versehen sind, deren Breite der Dicke der Bodenplatte (1) entspricht, wobei die Seitenwände (2) an den sich gegenseitig berührenden Seitenkanten (9) auf Gehrung geschnitten sind und Gehrungsschnittflächen (10) aufweisen, und die Bodenplatte (1) in die Nuten (7) einsteckbar und in dieser Stellung mit den Seitenwänden (2) dauerhaft verklebbar ist, und im Bereich des oberen Randes der Seitenwände (2) eine deren Ränder (5) beidseitig überdeckende Umrandung (15,20) anbringbar ist (Fig. 5).

## Beschreibung

Pflanzenkübel bestehen üblicherweise aus einer Bodenplatte und vier Seitenwänden, die gemeinsam einen vier- oder mehreckigen, oben offenen Behälter bilden. Sofern solche Pflanzenkübel aus steinernem Plattenmaterial gefertigt werden, ist es im Hinblick auf das hohe spezifische Gewicht dieses Werkstoffs zweckmäßig, die für den Zusammenbau des Kübels verwendeten Plattenelemente möglichst dünnwandig auszubilden, um auf diese Weise das Gesamtgewicht des Kübels so gering wie möglich zu halten. Hierbei sind die Stoßflächen der Seitenwände und deren Verbindungsmittel meist sichtbar.

Der Erfindung liegt die Aufgabe zugrunde, bei einem aus mehreren Plattenelementen bestehenden Kübel die Bodenplatte und die einzelnen Seitenwände ohne Zuhilfenahme von von außen sichtbaren Befestigungsmitteln derart miteinander zu verbinden, dass auch bei Verwendung dünnwandiger Plattenelemente für die Bodenplatte und die Seitenwände ein verwindungssteifer und bruchfester Kübel herstellbar ist und weder die Verbindungsmittel der Bodenplatte bzw. der Seitenwände sichtbar sind.

Diese Aufgabe wird durch die folgenden Merkmale bzw. Maßnahmen gelöst: Bei dem aus einer Bodenplatte und mehreren Seitenwänden bestehenden Pflanzenkübel sind die Seitenwände an ihren Innenseiten mit einer in gemeinsamer Ebene horizontal verlaufenden Nut versehen, deren Breite der Dicke der Bodenplatte entspricht, wobei die Seitenwände an ihren sich gegenseitig berührenden Seitenkanten auf Gehrung geschnitten sind und die Bodenplatte in die Nuten einsteckbar und in dieser Stellung mit den Seitenwänden dauerhaft verklebbar ist, und die Seitenwände an ihren sich gegenseitig berührenden Gehrungsschnittflächen dauerhaft verklebbar sind, wobei auf dem oberen Rand der Seitenwände eine die Ränder beidseitig überdeckende Umrandung befestigbar ist.

Durch das Verkleben der verschiedenen Plattenelemente und der dadurch bedingten Einsparung mechanisch wirkender Befestigungs- oder Kupplungsmittel wird zum einen die Anfertigung der Kübel vereinfacht und zudem werden zum anderen außen- und innenseitig glatte Flächen erzielt, was nicht nur dem Erscheinungsbild der Kübel zugute kommt, sondern aufgrund des Fehlens vorspringender Befestigungsmittel auch das Befüllen und Entleeren der Kübel vereinfacht. Durch das Anfertigen der Gehrungsschnitte an den Seitenkanten der Seitenwände werden aufgrund des schrägen Schnittverlaufs werden gleichzeitig vergrößerte Kontaktflächen geschaffen, wodurch die Festigkeit der Verklebungsstellen deutlich erhöht wird. Schließlich wird durch das Befestigen der Umrandung auf dem oberen Rand der Seitenwände die Biege- und Bruchfestigkeit der Seitenwände wesentlich erhöht und damit die Festigkeit des gesamten Kübels verbessert. Eine derartige Umrandung bringt darüber hinaus noch die weiteren Vorteile, dass sie bei der Handhabung des Kübels zum Anfassen dienen kann und damit dessen Handhabung erleichtert und ferner das Erscheinungsbild von aus dünnwandigen Plattenelementen gefertigten Kübeln verbessert, indem sie durch das beidseitige Abdecken der relativ schmalen Stirnflächen der Seitenwände den Kübel stabiler und haltbarer erscheinen lässt.

Gemäß einem weiteren Vorschlag ist die Umrandung von Leisten gebildet, deren Länge der Länge des oberen Randes der jeweiligen Seitenwand entspricht, wobei die Leisten eine Längsnut aufweisen, deren Breite der Dicke der Seitenwände entspricht, wobei die Seitenwände an ihren sich gegenseitig berührenden Stirnseiten auf Gehrung geschnitten und nach dem Aufstecken auf die Seitenwände mit diesen und an ihren sich gegenseitig berührenden Stirnseiten dauerhaft verklebbar sind. Bei dieser Ausbildung der Umrandung können die Leisten vor dem Aufsetzen und Festkleben auf den Seitenwänden abgelängt und an den Stirnseiten auf Gehrung geschnitten werden. In diesem Fall ist die Länge der Leisten sehr genau an die Länge der zugeordneten Seitenwände anzupassen, damit die Gehrungsschnittflächen der Seitenwände und der jeweiligen Stirnseiten der ihnen zugeordneten Leisten exakt in einer gemeinsamen Ebene liegen.

Alternativ hierzu können die Leisten aber auch zuerst auf den noch nicht zusammengefügten Seitenwänden festgeklebt und erst danach gemeinsam mit den Seitenwänden abgelängt und dabei mit ihnen auf Gehrung geschnitten werden. In diesem Fall ist sicher gestellt, daß die Gehrungsschnittflächen der Seitenwände und der jeweiligen Stirnseiten der ihnen zugeordneten Leisten exakt in einer gemeinsamen Ebene liegen, wodurch gleichzeitig sichere Voraussetzungen für einwandfreie Klebeverbindungen geschaffen werden.

Nach einem anderen Vorschlag ist die Umrandung im jeweiligen Eckbereich von an den Seitenwänden angeordneten winkelförmigen Eckstücken und zwischen diesen angeordneten Leisten gebildet, wobei die Länge der Leisten dem gegenseitigen Abstand je zweier Eckstücke entspricht. Ferner weisen die Eckstücke eine Winkelnut und die Leisten eine Längsnut auf, wobei die Breite dieser Nuten der Dicke der Seitenwände entspricht, und es sind die Eckstücke und die Leisten nach dem Aufstecken auf die Seitenwände mit diesen dauerhaft verklebbar. Die hierbei verwendeten winkelförmigen Eckstücke sind einstückig ausgebildet und ergeben nach dem Aufsetzen und Festkleben auf den Eckbereich zweier Seitenwände eine formschlüssige und damit auch bei extremer Belastung haltbare Verbindung. Da die zwischen je zwei Eckstücken eingesetzten Leisten mit ihren Stirnseiten nicht mit den angrenzenden Stirnseiten der Eckstücke verklebt werden müssen, besteht somit auch keine Notwendigkeit, die Leisten exakt auf das vorgegebene Abstandsmaß zwischen den jeweiligen Eckstücken abzulängen.

Es wird ferner vorgeschlagen, dass die Bodenplatte einen Abstand zum unteren Rand der Seitenwände und damit zur Aufstellfläche aufweist und dass in der Bodenplatte wenigstens eine Abflussöffnung für überschüssiges Wasser vorgesehen ist.

Nach einem weiteren Vorschlag soll der Pflanzenkübel als ein flach zusammengelegter Bausatz ausgebildet sein, der auf diese Weise platzsparend gelagert und transportiert werden kann.

Weitere Einzelheiten und Vorteile der Erfindung ergeben sich aus der nachfolgenden Beschreibung zweier in der Zeichnung dargestellter Ausführungsbeispiele der Erfindung:

Es zeigt:
- **Fig. 1:**: eine Draufsicht auf einen Kübel mit einer ersten Ausführungs form einer Umrandung;
- **Fig. 2:**: eine Draufsicht auf einen vergrößert dargestellten Eckbereich einer Seitenwand;
- **Fig. 3:**: eine Draufsicht auf einen vergrößert dargestellten Eckbereich einer Leiste;
- **Fig. 4:**: eine Draufsicht auf einen vergrößert dargestellten Eckbereich einer Seitenwand und einer aufgesetzten Leiste;
- **Fig. 5:**: eine Schnittdarstellung eines Kübels nach Linie V-V der Fig.1 mit mehreren vergrößert dargestellten unterschiedlichen Querschnittsformen (a, b und c) der Leisten;
- **Fig. 6:**: eine Draufsicht auf einen Kübel mit einer zweiten Ausführungsform einer Umrandung;
- **Fig. 7:**: eine Draufsicht auf ein vergrößert dargestelltes Eckstück und die Endbereiche zweier angrenzender Leisten.

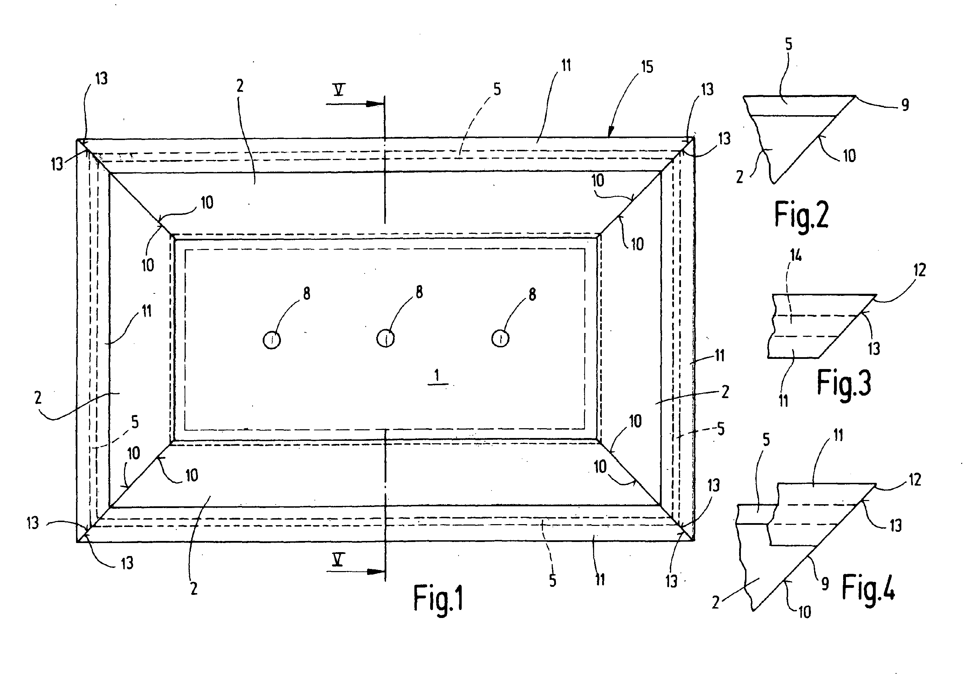

Der in Fig.1 dargestellte Pflanzenkübel ist aus steinernen Plattenelementen gefertigt und besteht aus einer Bodenplatte 1 und vier Seitenwänden 2, deren Innenseiten mit 3 und deren Außenseiten mit 4 bezeichnet sind. Die Seitenwände 2 verlaufen von ihrem oberen Rand 5 ausgehend in Richtung ihres unteren Randes 6 schräg einwärts gerichtet.

In den Seitenwänden 2 ist an ihrer Innenseite 3 eine horizontale Nut 7 ausgebildet, deren in vertikaler Richtung gemessene Breite der Dicke der Bodenplatte 1 entspricht. Die Nuten 7 haben einen Abstand zum unteren Rand 6 der Seitenwände 2. In der Bodenplatte 1 sind drei Abflussöffnungen 8 enthalten.

Die Seitenwände 2 sind an ihren Seitenkanten 9 auf Gehrung geschnitten, wodurch sich im Winkel von 45° schräg zur Ebene der Seitenwände 2 verlaufende Gehrungsschnittflächen 10 ergeben.

Beim ersten Ausführungsbeispiel ist jeder Seitenwand 2 eine Leiste 11 zugeordnet. Die Länge der Leisten 11 entspricht der jeweiligen Länge des oberen Randes 5 der zugeordneten Seitenwand 2. Die Stirnseiten 12 der Leisten 11 sind auf Gehrung geschnitten, wodurch sich im Winkel von 45° schräg verlaufende Gehrungsschnittflächen 13 ergeben, die den Gehrungsschnittflächen 10 der Seitenwände 2 entsprechen. Die Leisten 11 weisen an ihrer Unterseite je eine durchgehende Längsnut 14 auf, deren Breite der Dicke der Seitenwände 2 entspricht.

Das Montieren der Kübel geschieht in der Weise, dass die Bodenplatte 1 in die Nuten 7 der Seitenwände 2 eingesetzt und mit Hilfe eines Klebstoffes dauerhaft mit den Seitenwänden 2 verklebt wird. Gleichzeitig werden auch die Seitenwände 2 mit ihren sich paarweise berührenden Gehrungsschnittflächen 10 dauerhaft miteinander verklebt. Die Art des hierbei zur Verwendung gelangenden Klebstoffes ist auf das Material abgestimmt, aus dem die miteinander zu verbindenden Plattenelemente gefertigt sind.

Sofern die Leisten 11 unabhängig von der Bearbeitung der Seitenwände 2 abgelängt und an ihren Stirnseiten 12 auf Gehrung geschnitten werden, werden sie nach dem Zusammensetzen und Verkleben der Seitenwände 2 (Plattenelemente 1, 2) mit ihren Nuten 14 auf die Seitenwände 2 aufgesteckt und sowohl im Bereich der Nuten 14 als auch an ihren sich paarweise berührenden Gehrungsschnittflächen 13 dauerhaft verklebt.

Wenn jedoch die Leisten 11 auf den noch nicht fertig bearbeiteten und daher auch noch nicht zusammengefügten Seitenwänden 2 festgeklebt und erst danach gemeinsam mit den Seitenwänden 2 abgelängt und dabei mit ihnen auf Gehrung geschnitten wurden, ist auf einfache Weise gewährleistet, dass die Gehrungsschnittflächen 10 der Seitenwände 2 und die Gehrungsschnittflächen 13 der ihnen zugeordneten Leisten 11 exakt in einer gemeinsamen Ebene liegen. In diesem Fall werden beim Zusammenfügen der Seitenwände 2 zugleich auch die bereits auf ihnen befestigten Leisten 11 mit ihren sich paarweise berührenden Gehrungsschnittflächen 13 dauerhaft miteinander verklebt.

In beiden Fällen bilden die mit den Seitenwänden 2 und miteinander fest verbundenen Leisten 11 eine Umrandung 15 für den Kübel.

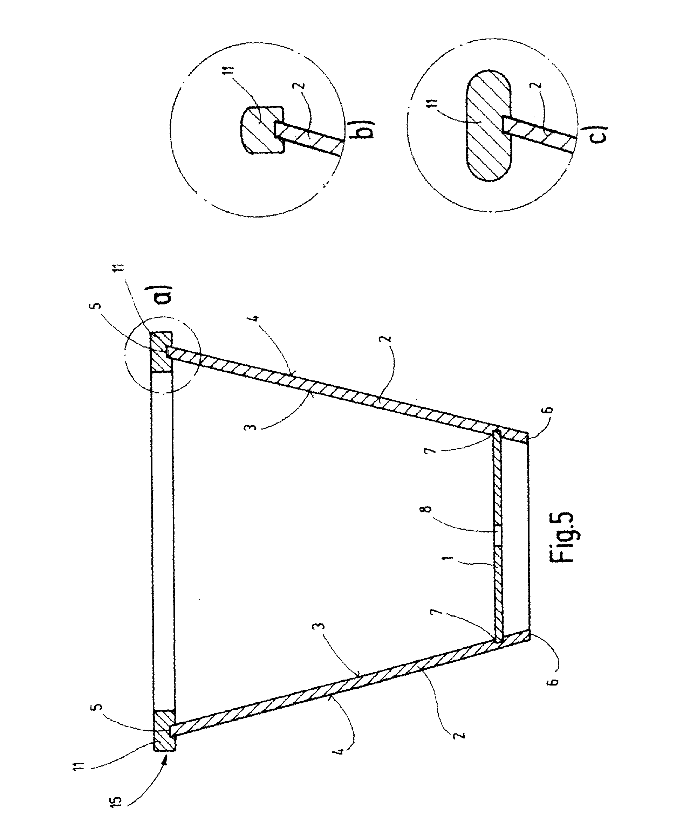

Die Leisten 11 können gemäß Fig. 5 unterschiedliche Querschnitte aufweisen. Den verschiedenen Querschnittsformen ist jedoch gemeinsam, dass sie sehr viel breiter sind als die Dicke bzw. Wandstärke der Seitenwände 2 und beidseitig über den oberen Rand 5 der Seitenwände 2 überstehen. Auf diese Weise bewirkt die Umrandung 15 eine Erhöhung der Biege- und Bruchfestigkeit der Seitenwände 2 und damit eine Verbesserung der Festigkeit und Verwindungssteifigkeit des gesamten Kübels. Sofern insbesondere die Seitenwände 2 aus dünnwandigem Plattenmaterial gefertigt sind, hat eine breite Umrandung 15 noch den weiteren Vorteil, dass der Kübel insgesamt nicht nur stabiler ist, sondern auch stabiler und damit haltbarer aussieht. Die Umrandung 15 bringt schließlich noch den Vorteil, dass sie bei der Handhabung des Kübels zum Anfassen dienen kann und damit dessen Handhabung erleichtert.

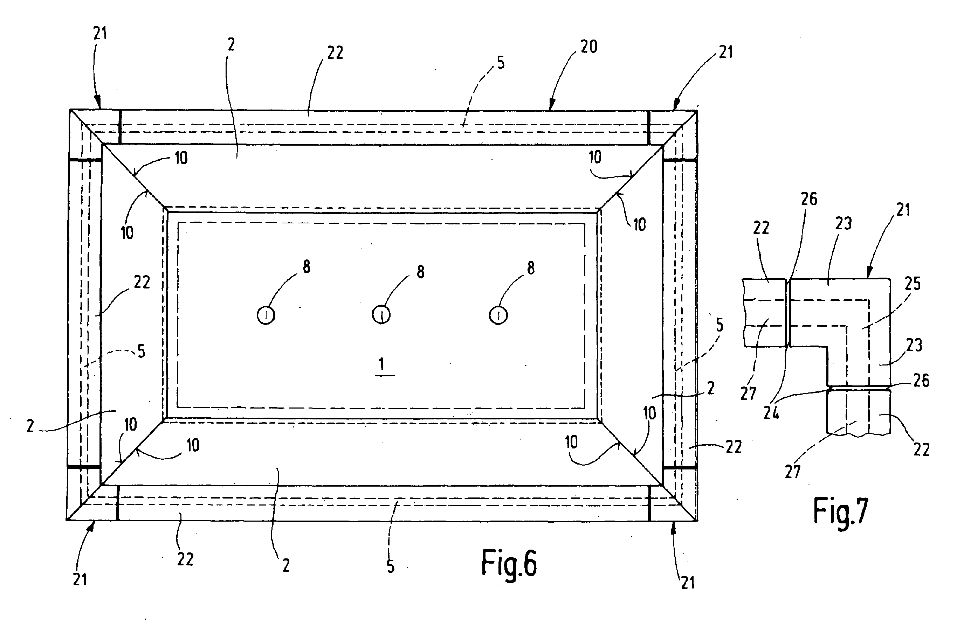

Beim zweiten Ausführungsbeispiel (Fig. 6) ist der eigentliche Kübel in gleicher Weise wie beim ersten Ausführungsbeispiel ausgebildet. Er besteht daher ebenfalls aus einer Bodenplatte 1 und vier Seitenwänden 2 mit dem oberen Rand 5. Die Seitenwände 2 sind an ihren Seitenkanten 9 auf Gehrung geschnitten, wodurch sich im Winkel von 45° schräg zur Ebene der Seitenwände 2 verlaufende Gehrungsschnittflächen 10 ergeben.

Beim zweiten Ausführungsbeispiel besteht die hier mit 20 bezeichnete Umrandung aus vier winkelförmigen Eckstücken 21 und vier zwischen den Eckstücken 21 angeordneten Leisten 22.

Die Eckstücke 21 sind einstückig ausgebildet und weisen zwei im Winkel von 90° verlaufende Schenkel 23 auf, die mit zwei rechtwinklig verlaufenden Stirnseiten 24 abschließen. Die Eckstücke 21 weisen an ihrer Unterseite je eine Winkelnut 25 auf, deren Breite der Dicke der Seitenwände 2 entspricht.

Die Länge der Leisten 22 ist auf den gegenseitigen Abstand zwischen zwei Eckstücken 21 abgestimmt. Die Leisten 22 haben zwei rechtwinklig verlaufende Stirnseiten 26 und weisen an ihrer Unterseite je eine durchgehende Längsnut 27 auf, deren Breite der Dicke der Seitenwände 2 entspricht. Die Leisten 22 können hinsichtlich ihres Querschnittes wie die Leisten 11 des ersten Ausführungsbeispieles ausgebildet sein und daher gemäß Fig. 5 unterschiedliche Querschnitte aufweisen. Die für die Leisten 22 gewählte Querschnittsform wird man zweckmäßigerweise auch bei der Gestaltung der Eckstücke 21 verwenden.

Die Eckstücke 21 werden nach dem Montieren und Verkleben der Seitenwände 2 mit der Bodenplatte 1 jeweils im Eckbereich je zweier Seitenwände 2 mit ihren Winkelnuten 25 auf die Seitenwände 2 aufgesetzt und mit ihnen dauerhaft verklebt. Anschließend werden die passend abgelängten Leisten 22 mit ihren Längsnuten 27 zwischen den Eckstücken 21 auf die Seitenwände 2 aufgesetzt und ebenfalls mit ihnen dauerhaft verklebt.

Die einstückig ausgebildeten Eckstücke 21 ergeben eine formschlüssige und damit besonders hoch belastbare Verbindung der Seitenwände 2, so dass sie im Zusammenwirken mit den die Biege- und Bruchfestigkeit der Seitenwände 2 erhöhenden Leisten 22 dem Kübel insgesamt eine besonders große Stabilität geben. Da die zwischen je zwei Eckstücken 21 eingesetzten Leisten 22 mit ihren Stirnseiten 26 nicht mit den angrenzenden Stirnseiten 24 der Eckstücke 21 verklebt werden müssen, besteht somit auch keine Notwendigkeit, die Leisten 22 exakt auf das vorgegebene Abstandsmaß zwischen den jeweiligen Eckstücken 21 abzulängen, was die Anfertigung bzw. Bearbeitung der Leisten 22 deutlich vereinfacht.

Sofern insbesondere die Seitenwände 2 aus dünnwandigem Plattenmaterial gefertigt sind, verdeckt eine breite Umrandung 20 in gleicher Weise wie die Umrandung 15 den relativ schmalen Rand 5 der Seitenwände 2 und lässt deshalb den Kübel stabiler und belastbarer erscheinen. Darüber hinaus eröffnet eine aus Eckstücken 21 und Leisten 22 bestehende Umrandung 20 zusätzliche gestalterische Möglichkeiten, indem z. B. die Eckstücke gegenüber den Leisten hinsichtlich des verwendeten Materials, der Oberflächenstruktur, der Formgestaltung und / oder der Farbe anders ausgebildet werden können.

## Patentansprüche

1. Pflanzenkübel bestehend aus einer Bodenplatte (1) und mehreren Seitenwänden (2), mit folgenden Merkmalen:
a, die Seitenwände (2) sind an ihren Innenseiten (3) mit einer in gemeinsamer Ebene horizontal verlaufenden Nut (7) versehen, deren Breite der Dicke der Bodenplatte (1) entspricht,
b, die Seitenwände (2) sind an den sich gegenseitig berührenden Seitenkanten (9) auf Gehrung geschnitten und weisen Gehrungsschnittflächen (10) auf,
c, die Bodenplatte (1) ist in die Nuten (7) einsteckbar und in dieser Stellung mit den Seitenwänden (2) dauerhaft verklebbar,
d, die Seitenwände (2) sind an den sich gegenseitig berührenden Gehrungsschnittflächen (10) dauerhaft verklebbar,
e, auf den oberen Rand (5) der Seitenwände (2) ist eine die Ränder (5) beidseitig überdeckende Umrandung (15,20) anbringbar.

2. Pflanzenkübel nach Anspruch 1, **dadurch gekennzeichnet, dass** die Umrandung (15) von Leisten (11) gebildet ist, deren Länge der Länge des oberen Randes (5) der jeweiligen Seitenwand (2) entspricht, dass die Leisten (11) eine Längsnut (14) aufweisen, deren Breite der Dicke der Seitenwände (2) entspricht, die Leisten (11) an ihren sich gegenseitig berührenden Stirnseiten (12) auf Gehrung geschnitten sind und Gehrungsschnittflächen (13) aufweisen und nach dem Aufstecken auf die Seitenwände (2) mit ihren Längsnuten (14) auf den Seitenwänden (2) und an den sich gegenseitig berührenden Gehrungsschnittflächen (13) dauerhaft verklebbar sind.

3. Pflanzenkübel nach Anspruch1, **dadurch gekennzeichnet, dass** die Umrandung (20) von im Eckbereich von je zwei Seitenwänden (2) angeordneten winkelförmigen Eckstücken (21) und zwischen den Eckstücken (21) angeordneten Leisten (22) gebildet ist, wobei die Länge der Leisten (22) dem gegenseitigen Abstand je zweier Eckstücke (21) entspricht, dass die Eckstücke (21) eine Winkelnut (25) und die Leisten (22 ) eine Längsnut (27) aufweisen, wobei die Breite dieser Nuten (25, 27) der Dicke der Seitenwände (2) entspricht und dass die Eckstücke (21) und die Leisten (22) nach dem Aufstecken auf die Seitenwände (2) mit ihren Nuten (25, 27) auf den Seitenwänden (2) dauerhaft verklebbar sind.

4. Pflanzenkübel nach einem der Ansprüche 1 bis 3, **dadurch gekennzeichnet, dass** die Bodenplatte (1) einen Abstand zum unteren Rand (6) der Seitenwände (2) aufweist und mit wenigstens einer Abflussöffnung (8) versehen ist.

5. Pflanzenkübel nach einem der Ansprüche 1 bis 3, **dadurch gekennzeichnet, dass** dieser als ein für Transport und Lagerung kompakter Bausatz ausgebildet ist.
